(19) Europäisches Patentamt
European Patent Office
Office européen des brevets

(11) EP 4 227 358 B1

(12) **EUROPEAN PATENT SPECIFICATION**

(45) Date of publication and mention of the grant of the patent:
**30.10.2024 Bulletin 2024/44**

(21) Application number: **22217216.5**

(22) Date of filing: **29.12.2022**

(51) International Patent Classification (IPC):
***C08L 7/00*** *(2006.01)* ***B60C 1/00*** *(2006.01)*
***C08K 3/04*** *(2006.01)* ***C08K 3/36*** *(2006.01)*
***C08L 9/00*** *(2006.01)*

(52) Cooperative Patent Classification (CPC):
(C-Sets available)
**C08L 7/00; B60C 1/0016; B60C 11/005; B60C 11/033; C08L 9/00;** B60C 2011/0033; B60C 2200/06; C08K 2201/005; C08K 2201/011; Y02T 10/86 (Cont.)

(54) **RUBBER COMPOSITION AND TIRE**

KAUTSCHUKZUSAMMENSETZUNG UND REIFEN

COMPOSITION DE CAOUTCHOUC ET PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.02.2022 JP 2022018256**

(43) Date of publication of application:
**16.08.2023 Bulletin 2023/33**

(73) Proprietor: **Sumitomo Rubber Industries, Ltd.**
**Kobe-shi, Hyogo 651-0072 (JP)**

(72) Inventor: **GONDO, Satoshi**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 578 626**
**EP-A1- 2 818 507**
**EP-A1- 3 572 459**
**US-A1- 2020 131 346**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 227 358 B1

Processed by Luminess, 75001 PARIS (FR)

(Cont. next page)

(52) Cooperative Patent Classification (CPC): (Cont.)

C-Sets
**C08L 7/00, C08L 9/06, C08L 9/00, C08K 3/34, C08K 3/36**

**Description**

TECHNICAL FIELD

The present invention relates to a rubber composition and a tire.

BACKGROUND OF THE INVENTION

Suppression of early abrasion of a land part located in the middle of a tread has been conventionally considered. For example, JP 2020-117020 A describes that a depth of a main groove and a shape of a tread surface of a land part are defined, thereby suppressing early abrasion of a middle land part and improving abrasion resistance.
Further prior art rubber compositions and tires made from such compositions are disclosed in the following documents US 2020 1 131 346 A1, EP 2 578 626 A1, EP 572 459 A1 and EP 2 818 507 A1.

SUMMARY OF THE INVENTION

It is an object of the present invention to suppress early abrasion under a condition that a large force is applied for a long time during low-speed running.
The present invention relates to:

a rubber composition comprising

a rubber component that comprises an isoprene-based rubber, a butadiene rubber, and a styrene-butadiene rubber, and
a filler that comprises particulate carbon black and silica,

wherein an average primary particle size of the particulate carbon black is 19 nm or less,
wherein, when a content (part by mass) of the particulate carbon black based on 100 parts by mass of the rubber component is defined as A and a content (part by mass) of the silica based on 100 parts by mass of the rubber component is defined as B, A and B satisfy the inequality (1) described below

$$B / (A + B) < 0.50 \quad (1),$$

wherein the average primary particle size of carbon black is calculated by measuring 400 or more primary particles observed in the field of view with a transmission electron microscope and calculating an arithmetic average of them.

According to the present invention, a rubber composition that can suppress early abrasion under a condition that a large force is applied for a long time during low-speed running and improve abrasion resistance and a tire comprising a tread composed of the rubber composition can be provided.

BRIEF DESCRIPTION OF THE DRAWINGS

FIG. 1 is a cross-sectional view of a tire according to one embodiment of the present invention on a surface including a rotation axis.
FIG. 2 is a view showing a tread grounding surface in a tire according to one embodiment of the present invention. The surrounded area in FIG. 2 is the tread grounding surface.

DETAILED DESCRIPTION

The present invention is described below. However, the following descriptions are illustrative for explaining the present invention, and are not intended to limit the technical scope of the present invention to this description range only. Besides, in the present specification, a numerical range identified with "to" means to include the numerical values of both ends.
A rubber composition according to the present invention comprises a rubber component that comprises an isoprene-based rubber, a butadiene rubber, and a styrene-butadiene rubber, and a filler that comprises particulate carbon

black and silica, wherein an average primary particle size of the particulate carbon black is 19 nm or less, wherein, when a content (part by mass) of the particulate carbon black based on 100 parts by mass of the rubber component is defined as A and a content (part by mass) of the silica based on 100 parts by mass of the rubber component is defined as B, A and B satisfy the inequality (1) described below B / (A + B) < 0.50 (1).

A mechanism by which the rubber composition according to the present invention can suppress early abrasion under a condition that a large force is applied for a long time during low-speed running and improve abrasion resistance is considered as follows, although the following consideration is not intended to be bound by any theory. That is, (a) since the rubber component comprises three types of rubbers, an isoprene-based rubber, a styrene-butadiene rubber, and a butadiene rubber, it is considered that distortion due to long-term and large deformation is easy to relax. Moreover, (b) it is considered that the three types of the rubber components are mutually reinforced by making the rubber composition include a given particulate carbon black. Furthermore, (c) it is considered that silica compounded in the rubber composition is preferentially dispersed in an isoprene-based rubber layer and reinforces the layer. Additionally, with cooperation of these (a) to (c), it is considered that early abrasion is suppressed even under a condition that a large force is applied for a long time during low-speed running and abrasion resistance is improved.

In the rubber composition, when a content (part by mass) of the particulate carbon black based on 100 parts by mass of the rubber component is defined as A and a content (part by mass) of the silica based on 100 parts by mass of the rubber component is defined as B, A and B preferably satisfy the following inequality (1).

$$B / (A + B) < 0.50 \qquad (1)$$

Since a ratio of the silica to a total amount of the carbon black and the silica of the filler becomes less than half of the total amount in the case where the above-described inequality (1) is satisfied, poor dispersion of the silica is suppressed, and it is considered that effects of the present invention are better exerted.

The rubber composition preferably further comprises a resin component.

When the rubber composition further comprises a resin component, it becomes easier to convert impact or the like into heat, and thus it is considered that early abrasion is further suppressed.

The rubber composition further comprises sulfur, and a content of the sulfur based on 100 parts by mass of the rubber component is preferably 1.25 parts by mass or less.

When the content of the sulfur is suppressed, room for deterioration of a rubber can remain even at the last stage of abrasion, and it is considered that early abrasion can be suppressed.

The tire according to the present invention is a tire comprising a tread, the tread at least comprising a first layer whose outer surface constitutes a tread surface and a second layer located on the innermost side in a tire radial direction, the first layer being composed of the rubber composition.

A mechanism by which the effects of the present invention is exerted in the tire according to the present invention is considered as follows, although the following consideration is not intended to be bound by any theory. That is, the mechanism by which the rubber composition of the present invention is considered to exert the effects of the present invention is as described above in (a) to (c). In the tire of the present invention, (d) the first layer of the tread that comes into contact with a road surface is composed of the rubber composition of the present invention, and, furthermore, the tread have a structure having at least two layers. Therefore, it is considered that the effects of the rubber composition of the present invention are exerted more directly. Additionally, with cooperation of these (a) to (d), it is considered that early abrasion is suppressed even under a condition that a large force is applied for a long time during low-speed running and abrasion resistance is improved.

The tire according to the present invention is a tire comprising a tread, the tread comprising a first layer whose outer surface constitutes a tread surface, a second layer located on the innermost side in a tire radial direction, and further at least one intermediate layer between the first layer and the second layer, the first layer being composed of the rubber composition.

A mechanism by which the effects of the present invention are exerted in the tire according to the present invention is considered as follows, although the following consideration is not intended to be bound by any theory. That is, the mechanism by which the rubber composition of the present invention is considered to exert the effects of the present invention is as described above in (a) to (c). In the tire of the present invention, (d) the first layer of the tread that comes into contact with a road surface is composed of the rubber composition of the present invention, and, furthermore, the tread have a structure having at least three layers. Therefore, it is considered that the effects of the rubber composition of the present invention are exerted more directly. Moreover, (e) the tread is made to have a structure having three or more layers, so that it is considered that it becomes easier to absorb impact. With cooperation of these (a) to (e), it is considered that early abrasion is suppressed even under a condition that a large force is applied for a long time during low-speed running and abrasion resistance is improved.

The tire according to the present invention is a tire comprising a tread, the tread comprising a first layer whose

outer surface constitutes a tread surface, a second layer located on the innermost side in a tire radial direction, and further at least one intermediate layer between the first layer and the second layer, at least one of the first layer, the second layer, and the intermediate layer being composed of the rubber composition.

A mechanism by which the effects of the present invention are exerted in the tire according to the present invention is considered as follows, although the following consideration is not intended to be bound by any theory. That is, it is considered that the mechanism when the first layer is composed of the rubber composition of the present invention is that (a) to (e) cooperate with one another as described above. However, in a case where the rubber composition of the present invention constitutes another layer other than the first layer, that is, the intermediate layer or the second layer, the above-described effect (d) cannot be expected. However, nevertheless, the above-described (a) to (c) and (e) cooperate with one another, so that it is considered that early abrasion is suppressed even under a condition that a large force is applied for a long time during low-speed running and abrasion resistance is improved.

In the case where the first layer is composed of the rubber composition, when a land ratio of the tread surface is defined as C, a content (part by mass) $A_1$ of the particulate carbon black based on 100 parts by mass of the rubber component in the first layer and C preferably satisfy the following inequality (2).

$$A_1 \times C < 6000 \qquad (2)$$

Both of the land ratio and the content of the particulate carbon black act in a direction in which the rigidity of the tread is increased, and it is considered that both of them harmonize with each other in such a manner that they control each other as in the inequality (2), thereby achieving optimal abrasion resistance.

In a rubber layer of the tread that is composed of the rubber composition, when a thickness (mm) of the rubber layer is defined as D, a content (part by mass) A of the particulate carbon black based on 100 parts by mass of the rubber component in the rubber layer and D preferably satisfy the following inequality (3).

$$A \times D < 2000 \qquad (3)$$

Both of the thickness of the rubber layer and the content of the particulate carbon black act in a direction in which the rigidity of the tread is increased, and it is considered that both of them harmonize with each other in such a manner that they control each other as in the inequality (3), thereby achieving optimal abrasion resistance.

In a tire in which both of the first layer and an intermediate layer adjacent to the first layer among the at least one intermediate layer are composed of the rubber composition, when a content (part by mass) of the particulate carbon black based on 100 parts by mass of the rubber component of the first layer is defined as $A_1$ and a content (part by mass) of the particulate carbon black based on 100 parts by mass of the rubber component of the intermediate layer adjacent to the first layer is defined as $A_m$, $A_1$ and $A_m$ preferably satisfy the following inequality (4),

$$A_m / A_1 < 1.00 \qquad (4)$$

(provided that $A_m$ is 20 or more).

It is considered that creation of a concentration gradient in the content of the particulate carbon black makes it easier for the tread layers consisting of three or more layers to absorb impact.

In a tire in which both of the first layer and an intermediate layer adjacent to the first layer among the at least one intermediate layer are composed of the rubber composition, when a content (part by mass) of the silica based on 100 parts by mass of the rubber component of the first layer is defined as $B_1$ and a content (part by mass) of the silica based on 100 parts by mass of the rubber component of the intermediate layer adjacent to the first layer is defined as $B_m$, $B_1$ and $B_m$ preferably satisfy the following inequality (5),

$$B_m / B_1 < 1.00 \qquad (5)$$

(provided that $B_m$ is 8 or more).

It is considered that creation of a concentration gradient in the content of the silica makes it easier for the tread layers consisting of three or more layers to absorb impact.

The tire is preferably a heavy-duty tire.

In a case of a heavy-duty vehicle with a high loading capacity, such as a truck or a bus, it is considered that the effects of the present invention are remarkably exhibited.

[Definition]

Unless otherwise noted, a "size or the like of each part of a tire" is defined as a value specified in a standardized state in which the tire is rim-assembled to a standardized rim, filled with a standardized internal pressure, and applied with no load.
The "standardized rim" is a rim defined for each tire in a standard system including a standard, on which the tire is based, by the standard, and refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.
A "standardized internal pressure" is an air pressure defined for each tire in a standard system including a standard, on which the tire is based, by each standard, i.e., the "MAXIMUM AIR PRESSURE" in JATMA, the maximum value described in the table "TIRE LOAD LIMITS AT VARIOUS COLD INFLATION PRESSURES" in TRA, or "INFLATION PRESSURE" in ETRTO.
A "standardized load" means a load defined in a standard system including a standard, on which the tire is based. The "standardized load" is the "MAXIMUN LOAD CAPACITY" in JATMA, the maximum value described in the table "TIRE LOAD LIMITS AT VARIOUS COLD INFLATION PRESSURES" in TRA, or "LOAD CAPACITY" in ETRTO.
A "thickness of a tread" is a thickness of a tread on a tire center line that is measured in a state where a standardized rim is made to hold a tire that is cut along a plane including a rotation axis. In a case where a groove exists on the tire center line, the "thickness of a tread" is a thickness for which it is recognized that the groove is filled. For example, in FIG. 1, H corresponds to the thickness of a tread. Besides, the thickness of a tread is an average of thicknesses of the tread that are measured at positions of five portions of the tire obtained by rotating the tire in 72 degrees increments in a circumferential direction. Thicknesses of the first layer and other layers of the tread are also measured in the same manner.
In a grounding surface of the tread in a case where a standardized load is applied on a tire that is in a standardized state, a "land ratio" is a ratio (%) of an area of the grounding surface excluding areas of grooves and sipes (effective grounding area) to a total area of the grounding surface in which all of the grooves and the sipes existing in the grounding surface are filled (total grounding area). For example, a portion enclosed by a contour in FIG. 2 represents the grounding surface of the tread in the case where a standardized load is applied on the tire that is in a standardized state. Therefore, the ratio (%) of the area of the grounding surface excluding the areas of the grooves and the sipes (effective grounding area) to the total area of the grounding surface in which all of the grooves and the sipes existing in the grounding surface are filled (total grounding area) becomes the land ratio. Besides, the "total grounding area" and the "effective grounding area" are obtained as an average of areas in grounding shapes at five portions obtained in accordance with an operation described as follows. That is, the grounding shapes are obtained by assembling the tire to a standardized rim, filling the tire with air of a standardized internal pressure, letting the tire stand still at 25°C for 24 hours, applying ink to a tire tread surface, applying a standardized load on the tire to press the tire tread surface on cardboard (a camber angle is 0°), and performing transcription to a paper. The tire is rotated in 72 degrees increments in the circumferential direction, and the transcription is performed at five portions of the tire. An average of areas obtained by contours of obtained grounding shapes at the five portions is the total grounding area. An average of areas of inked portions at the five portions is the effective grounding area.

[Measuring method]

A "styrene content" is calculated by $^1$H-NMR measurement
A "vinyl bonding amount (1 ,2-bond butadiene unit amount)" is measured by JIS K 6239-2:2017.
A "weight-average molecular weight (Mw)" can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).
A "cis content (cis-1 ,4-bond butadiene unit amount)" is measured by JIS K 6239-2:2017.
An "average primary particle size of carbon black" can be calculated by measuring 400 or more primary particles observed in the field of view with a transmission electron microscope and calculating an arithmetic average of them. Besides, in a case where a particle has a spherical shape, a diameter of the sphere is defined as a particle size. In a case where a particle has a shape other than a spherical shape, an equivalent circle diameter (the positive square root of {4 $\times$ (the area of a particle) / $\pi$}) calculated from a transmission electron microscopy image is defined as a particle size.

A "$N_2SA$ of carbon black" is a value calculated by JIS K 6217-2:2017.

A "$N_2SA$ of silica" is a value measured by a BET method according to ASTM D3037-93.

Unless otherwise noted, a "softening point of the resin component" is a temperature at which a sphere drops when the softening point specified in JIS K 6220-1: 2015 is measured with a ring and ball softening point measuring device. In a case where the softening point is measured by another method, a notice to that effect will be given.

[Rubber composition]

The rubber composition of the present invention will be described below. The rubber composition of the present invention is a rubber composition comprising a rubber component that comprises an isoprene-based rubber, a butadiene rubber, and a styrene-butadiene rubber, and a filler that comprises particulate carbon black with an average primary particle size of 19 nm or less and silica.

<Rubber component>

The rubber composition of the present invention comprises, as rubber components, an isoprene-based rubber, a styrene-butadiene rubber (SBR), and a butadiene rubber (BR).

(Isoprene-based rubber)

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber; and the like. Among them, the natural rubber is preferable, and the non-modified natural rubber (NR) is more preferable. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably greater than 60% by mass, more preferably greater than 65% by mass, further preferably 70% by mass or more. On the other hand, the content of the isoprene-based rubber is less than 100% by mass.

A content of the isoprene-based rubber in the rubber composition of the first layer is preferably less than 90% by mass, more preferably less than 85% by mass, further preferably less than 80% by mass. A content of the isoprene-based rubber in the rubber composition of the intermediate layer is preferably less than 95% by mass, more preferably less than 90% by mass, further preferably less than 85% by mass. A content of the isoprene-based rubber in the rubber composition of the second layer may be less than 100% by mass, less than 99% by mass, or less than 98% by mass.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Additionally, hydrogenated ones of these SBR (hydrogenated SBR) and the like can be also used. These SBRs may be used alone, or two or more thereof may be used in combination.

As a SBR, an oil-extended SBR or a non-oil extended SBR can be used. When the oil-extended SBR is used, an oil-extending amount of the SBR, that is, a content of the extending oil in the SBR is preferably 10 to 50 parts by mass based on 100 parts by mass of a rubber solid content of the SBR.

Examples of the S-SBR that can be used in the present invention include those commercially available from JSR Corporation, Sumitomo Chemical Co., Ltd., Ube Industries, Ltd., Asahi Kasei Corporation, ZS Elastomer Co., Ltd., ARLANXEO, etc.

The modified SBR may be one modified at a main chain and/or a terminal thereof with a modifying agent or one modified with a polyfunctional modifying agent such as, for example, tin tetrachloride or silicon tetrachloride to partly have a branched structure, preferably a SBR modified at a main chain and/or a terminal thereof with a modifying agent having a functional group that interacts with silica (modified BR for silica). Particularly, the first layer and/or the second layer preferably comprises a modified SBR.

Examples of the above-described functional group interacting with silica include, for example, an amino group, an amide group, an alkoxysilyl group, an isocyanate group, an imino group, an imidazole group, an urea group, an ether

group, a carbonyl group, an oxycarbonyl group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydrocarbon group, a hydroxyl group, an oxy group, an epoxy group, etc. Besides, these functional groups may each have a substituent. Among them, from the viewpoint of improving dispersibility of silica, the amino group, the epoxy group, the hydroxyl group, the alkoxy group, and the alkoxysilyl group are preferable, and the amino group and the alkoxysilyl group are more preferable.

A styrene content of the SBR is preferably greater than 10% by mass, more preferably greater than 15% by mass, further preferably greater than 20% by mass, from the viewpoints of wet grip performance and abrasion resistance. Moreover, it is preferably less than 60% by mass, more preferably less than 55% by mass, further preferably less than 50% by mass, from the viewpoints of temperature dependency of grip performance and blow resistance. Besides, in the present specification, the styrene content of the SBR is calculated by the above-described method.

A vinyl content of the SBR is preferably greater than 10 mol%, more preferably greater than 13 mol%, further preferably greater than 15 mol%, from the viewpoints of ensuring reactivity with silica, wet grip performance, rubber strength, and abrasion resistance. Moreover, the vinyl content of the SBR is preferably less than 70 mol%, more preferably less than 60 mol%, further preferably less than 40 mol%, from the viewpoints of prevention of increase in temperature dependency, elongation at break, and abrasion resistance. Besides, in the present specification, the vinyl content of the SBR (1,2-bond butadiene unit amount) is measured by the above-described method.

A weight-average molecular weight (Mw) of the SBR is preferably greater than 200,000, more preferably greater than 250,000, further preferably greater than 300,000, from the viewpoint of wet grip performance. Moreover, the weight-average molecular weight is preferably less than 2,000,000, more preferably less than 1,500,000, further preferably less than 1,000,000, from the viewpoint of cross-linking uniformity. Besides, in the present specification, the weight-average molecular weight of the SBR can be calculated by the above-described method.

A content of the SBR in the rubber component is preferably less than 20% by mass, more preferably 15% by mass or less, further preferably less than 10% by mass.

A content of the SBR in the rubber composition of the first layer is preferably greater than 0% by mass, more preferably greater than 5% by mass, further preferably greater than 10% by mass. A content of the SBR in the rubber composition of the intermediate layer is preferably greater than 0% by mass, more preferably greater than 3% by mass, further preferably greater than 7% by mass. A content of the SBR in the rubber composition of the second layer is preferably greater than 0% by mass, more preferably greater than 0.5% by mass, further preferably 1.0% by mass or more.

(BR)

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As the high cis BR, for example, those commercially available form Zeon Corporation, Ube Industries, Ltd., JSR Corporation, etc. can be used. The cis content is preferably greater than 94 mol%, more preferably greater than 95 mol%, further preferably 96 mol% or more, particularly preferably 98 mol% or more. Besides, in the present specification, the cis content (cis-1,4-bond butadiene unit amount) is a value calculated by the above-described method.

As the rare-earth-based BR, those which are synthesized using a rare-earth element-based catalyst and have a vinyl content of preferably less than 1.8 mol%, more preferably less than 1.0 mol%, further preferably less than 0.8 mol%, and a cis content of preferably greater than 94 mol%, more preferably greater than 95 mol%, further preferably 96 mol% or more, particularly preferably 98 mol% or more, can be used. As the rare-earth-based BR, for example, those commercially available from LANXESS, ARLANXEO, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from Ube Industries, Ltd., etc. can be used.

Examples of the modified BR include those obtained by adding a tin compound after polymerizing 1,3-butadiene by a lithium initiator, the terminal of which is further bonded by tin-carbon bond (tin-modified BRs), a butadiene rubber whose main chain and/or terminal is modified with the above-described modifying agent having a functional group interacting with silica (modified BR for silica), and the like. Moreover, the modified BR may be either non-hydrogenated or hydrogenated.

A weight-average molecular weight (Mw) of the BR is preferably greater than 300,000, more preferably greater than 350,000, further preferably greater than 400,000, from the viewpoint of abrasion resistance. Moreover, it is preferably less than 2,000,000, more preferably less than 1,500,000, further preferably less than 1,000,000, from the viewpoint of cross-linking uniformity. Besides, the weight-average molecular weight of the BR can be calculated by the above-described method.

A content of the BR in the rubber component is preferably less than 20% by mass, more preferably 15% by mass or less, further preferably less than 10% by mass.

A content of the BR in the rubber composition of the first layer is preferably greater than 0% by mass, more preferably greater than 5% by mass, further preferably greater than 10% by mass. A content of the BR in the rubber composition of the intermediate layer is preferably greater than 0% by mass, more preferably greater than 3% by mass, further preferably greater than 7% by mass. A content of the BR in the rubber composition of the second layer is preferably greater than 0% by mass, more preferably greater than 0.5% by mass, further preferably 1.0% by mass or more.

Preferred aspects of the rubber component include a rubber component comprising an isoprene-based rubber the content of which is 70% by mass or more and less than 100% by mass, a SBR the content of which is greater than 0% by mass and less than 20% by mass, and a BR the content of which is greater than 0% by mass and less than 10% by mass. Moreover, the rubber component preferably consists of an isoprene-based rubber, a SBR, and a BR.

(Other rubber components)

The rubber component according to the present invention may comprise rubber components other than the above-described isoprene-based rubber, SBR, and BR. A cross-linkable rubber component commonly used in the tire industry can be used as another rubber component, examples of which include, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber a silicone rubber, a polyethylene chloride rubber, a fluororubber (FKM), an acrylic rubber (ACM), a hydrin rubber, and the like. These other rubber components may be used alone, or two or more thereof may be used in combination.

<Filler>

The rubber composition according to the present invention comprises given particulate carbon black and silica.

(Particulate carbon black)

Particulate carbon black is carbon black having an average primary particle size of 19 nm or less. As particulate carbon black, those commonly used in the tire industry can be appropriately used. The particulate carbon black may be used alone, or two or more thereof may be used in combination.

The average primary particle size of particulate carbon black is preferably less than 19 nm, more preferably 18 nm or less. A lower limit of the average primary particle size is not particularly limited and may be, for example, greater than 1 nm, greater than 3 nm, or greater than 5 nm. Besides, the average primary particle size of the particulate carbon black can be measured by the above-described method.

A nitrogen adsorption specific surface area ($N_2SA$) of particulate carbon black is preferably greater than 130 $m^2/g$, more preferably greater than 135 $m^2/g$, further preferably greater than 140 $m^2/g$, from the viewpoint of reinforcing property. Moreover, it is preferably less than 300 $m^2/g$, more preferably less than 200 $m^2/g$, further preferably less than 180 $m^2/g$, from the viewpoints of fuel efficiency and processability. Besides, the $N_2SA$ of the particulate carbon black can be measured by the above-described method.

As particulate carbon black, those manufactured and sold by ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. and the like can be used.

A content of particulate carbon black based on 100 parts by mass of the rubber component is preferably greater than 20 parts by mass, more preferably greater than 25 parts by mass, further preferably 27.5 parts by mass or more. On the other hand, the content of particulate carbon black is preferably less than 150 parts by mass, more preferably less than 100 parts by mass, further preferably less than 80 parts by mass, further preferably 55 parts by mass or less, further preferably less than 50 parts by mass.

The content of particulate carbon black in each rubber layer constituting the tread preferably has a concentration gradient decreasing from the first layer to the second layers, which will be described below in the column for explanation about the tire.

(Silica)

Silica is not particularly limited, and those common in the tire industry can be used, such as, for example, silica prepared by a dry process (anhydrous silica) and silica prepared by a wet process (hydrous silica). Among them, hydrous

silica prepared by a wet process is preferable from the reason that it has many silanol groups. The silica may be used alone, or two or more thereof may be used in combination.

A nitrogen adsorption specific surface area ($N_2SA$) of silica is preferably 120 $m^2/g$ or more, more preferably 140 $m^2/g$ or more, further preferably 160 $m^2/g$ or more, from the viewpoint of chipping resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by a BET method according to ASTM D3037-93.

A content of silica based on 100 parts by mass of the rubber component is preferably greater than 1 part by mass, more preferably greater than 3 parts by mass, further preferably 5 parts by mass or more. On the other hand, the content of silica is preferably less than 75 parts by mass, more preferably less than 50 parts by mass, further preferably less than 40 parts by mass, further preferably 27.5 parts by mass or less, further preferably less than 10 parts by mass, further preferably less than 7 parts by mass.

The content of silica in each rubber layer constituting the tread preferably has a concentration gradient decreasing from the first layer to the second layers, which will be described below in the column for explanation about the tire.

Regarding the content of silica and the content of particulate carbon black, the content of silica is preferably less than the content of particulate carbon black. That is, when the content (part by mass) of particulate carbon black based on 100 parts by mass of the rubber component is defined as A and the content (part by mass) of silica based on 100 parts by mass of the rubber component is defined as B, A and B preferably satisfy the following inequality (1).

$$B / (A + B) < 0.50 \qquad (1)$$

The right side of the above-described inequality (1) is preferably 0.40, more preferably 0.30, further preferably 0.25, further preferably 0.20, further preferably 0.15, further preferably 0.12.

A total content of silica and particulate carbon black based on 100 parts by mass of the rubber component is preferably greater than 25 parts by mass, more preferably greater than 35 parts by mass, further preferably greater than 45 parts by mass, further preferably greater than 50 parts by mass. Moreover, the total content is preferably less than 160 parts by mass, more preferably less than 120 parts by mass, further preferably less than 80 parts by mass, particularly preferably less than 60 parts by mass.

(Other fillers)

As a filler, in addition to the above-described particulate carbon black and silica, another filler may be further used. Such a filler is not particularly limited, and any fillers commonly used in this field can be used, such as, for example, carbon black other than the above-described particulate carbon black, aluminum hydroxide, alumina (aluminum oxide), calcium carbonate, magnesium sulfate, talc, and clay. These fillers may be used alone, or two or more thereof may be used in combination. The filler is preferably one that does not include any other filler and that consists of particulate carbon black and silica.

(Silane coupling agent)

A silane coupling agent can be used for the rubber composition of the present invention. The silane coupling agent is not particularly limited, and any silane coupling agents conventionally used in combination with silica in the tire industry can be used, examples of which include, for example, a sulfide-based silane coupling agent such as bis(3-triethoxysilylpropyl)disulfide and bis(3-triethoxysilylpropyl)tetrasulfide; a vinyl-based silane coupling agent such as vinyltriethoxysilane and vinyltrimethoxysilane; an amino-based silane coupling agent such as 3-aminopropyltriethoxysilane, 3-aminopropyltrimethoxysilane and 3-(2-aminoethyl)aminopropyltriethoxysilane; a glycidoxy-based silane coupling agent such as γ-glycidoxypropyltriethoxysilane and γ-glycidoxypropyltrimethoxysilane; a nitro-based silane coupling agent such as 3-nitropropyltrimethoxysilane and 3-nitropropyltriethoxysilane; a chloro-based silane coupling agent such as 3-chloropropyltrimethoxysilane and 3-chloropropyltriethoxysilane; a mercapto-based silane coupling agent; and the like. Among them, the sulfide-based silane coupling agent and/or the mercapto-based silane coupling agent are preferable. These silane coupling agents may be used alone, or two or more thereof may be used in combination.

The mercapto-based silane coupling agent is preferably a compound represented by the following chemical formula (1) and/or a compound comprising a bond unit A represented by the following chemical formula (2) and a bond unit B represented by the following chemical formula (3).

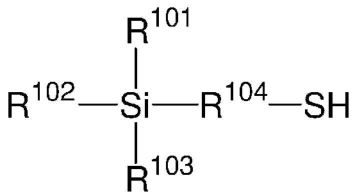

(1)

(wherein, $R^{101}$, $R^{102}$, and $R^{103}$ each independently represents an alkyl having 1 to 12 carbon atoms, alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

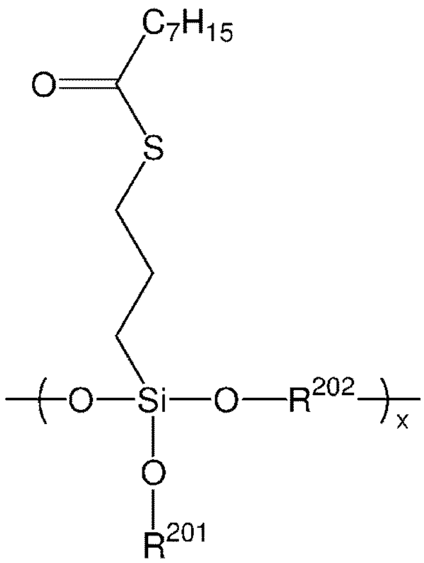

(2)

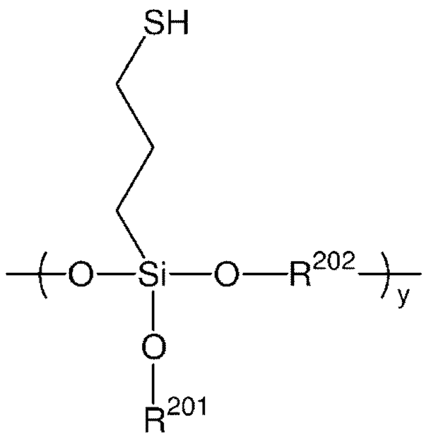

(3)

(wherein, x represents an integer of 0 or more; y represents an integer of 1 or more; $R^{201}$ represents a hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (4) (Si363 manufactured by Evonik Degussa GmbH), etc., and the compound represented by the following chemical formula (4) can be appropriately used. They may be used alone, or two or more thereof may be used in combination.

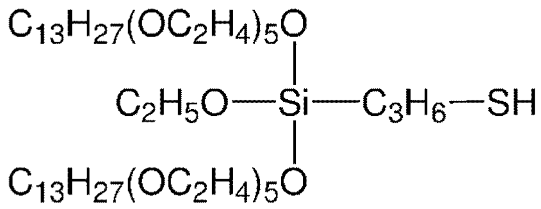

(4)

Examples of the compound comprising the bond unit A represented by the formula (2) and the bond unit B represented by the formula (3) include, for example, those manufactured and sold by Momentive Performance Materials, etc. They may be used alone, or two or more thereof may be used in combination.

A content of the silane coupling agent based on 100 parts by mass of silica is preferably greater than 1.0 part by mass, more preferably greater than 3.0 parts by mass, further preferably greater than 5.0 parts by mass, from the viewpoint of improvement in dispersibility of silica. Moreover, it is preferably less than 20 parts by mass, more preferably less than 15 parts by mass, further preferably less than 12 parts by mass, from the viewpoints of cost and processability.

<Resin component>

Examples of the resin component include, but not particularly limited to, a petroleum resin, a terpene-based resin, a rosin-based resin, a phenol-based resin, and the like which are commonly used in the tire industry. The resin component is preferably a thermoplastic resin. These resin components may be used alone, or two or more thereof may be used in combination.

Examples of the petroleum resin include a C5-based petroleum resin, an aromatic petroleum resin, a C5-C9-based petroleum resin, and the like. Among them, the C5-based petroleum resin means a resin obtained by polymerizing C5 fractions. Examples of C5 fractions include, for example, petroleum fractions equivalent to 4 to 5 carbon atoms, such as cyclopentadiene, pentene, pentadiene, and isoprene. Dicyclopentadiene resin (DCPD resin) is appropriately used as a C5-based petroleum resin.

The aromatic petroleum resin means a resin obtained by polymerizing C9 fractions and may be those undergoing hydrogeneration or modification. Examples of C9 fractions include, for example, petroleum fractions equivalent to 8 to 10 carbon atoms, such as vinyltoluene, alkylstyrene, indene, and methylindene. As specific example of the aromatic petroleum resin, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and the copolymer of α-methylstyrene and styrene is more preferable, because it is economical, easy to process, and excellent in heat generation. As the aromatic vinyl-based resin, for example, those commercially available from Braskem, Kraton Corporation, Eastman Chemical Company, etc. can be used.

The C5-C9-based petroleum resin means a resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, and dipentene; an aromatic modified terpene resin made from a terpene compound described above and an aromatic compound; and a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, α-methylstyrene, vinyltoluene, divinyltoluene, and the like. Examples of the phenol-based compound from which the terpene phenol resin is made include, for example, phenol, bisphenol A, cresol, xylenol, and the like.

Examples of the rosin-based resin include, but not particularly limited to, for example, a natural resin rosin such as a tall rosin, a gum rosin, and a wood rosin, a rosin-modified resin obtained by modifying it by hydrogenation, disproportionation, dimerization, or esterification, and the like.

Examples of the phenol-based resin include, but not particularly limited to, a phenol formaldehyde resin, an

alkylphenol formaldehyde resin, an alkyl phenol acetylene resin, an oil-modified phenol formaldehyde resin, and the like.

A softening point of the resin component is preferably 60 °C or higher, more preferably 65°C or higher, further preferably 70°C or higher, from the viewpoint of wet grip performance. Moreover, it is preferably 150 °C or lower, more preferably 140 °C or lower, further preferably 130 °C or lower, from the viewpoints of processability and improvement in dispersibility of the rubber component with the filler. Besides, a softening point specified in JIS K 6220-1: 2001 is measured with a ring and ball softening point measuring device, and the softening point can be defined as a temperature at which a sphere drops.

A content of the resin component when compounded based on 100 parts by mass of the rubber component is preferably greater than 0.5 parts by mass, more preferably greater than 1.0 part by mass, further preferably 1.5 parts by mass or more, from the viewpoint of chipping resistance. On the other hand, the content is preferably less than 20 parts by mass, more preferably less than 10 parts by mass, further preferably less than 5 parts by mass, from the viewpoint of suppressing heat generation.

<Other compounding agents>

The rubber composition of each layer of the tread according to the present invention can appropriately comprise compounding agents conventionally and commonly used in the tire industry, such as, for example, a plasticizing agent other than the resin component, wax, processing aid, stearic acid, zinc oxide, an antioxidant, a vulcanizing agent, and a vulcanization accelerator, in addition to the above-described components.

<Plasticizing agent other than resin component>

The rubber composition of each layer of the tread according to the present invention preferably comprises a plasticizing agent other than the resin component. Examples of the plasticizing agent include, for example, oil, a liquid rubber, an ester-based plasticizing agent, and the like.

Examples of oil include, for example, process oils, vegetable oils and fats, animal oils and fats, and the like. Examples of the process oils include paraffinic process oils, naphthenic process oils, aromatic process oils, and the like. Moreover, process oils each having a low polycyclic-aromatic-compound (PCA) content for environmental measures can also be used. Examples of the process oils each having a low PCA content include mild extraction solvates (MES), treated distillate aromatic extracts (TDAE), heavy naphthenic oil; and the like.

A content of oil when compounded based on 100 parts by mass of the rubber component is preferably greater than 1 part by mass, more preferably greater than 3 parts by mass, further preferably greater than 5 parts by mass, particularly preferably greater than 7 parts by mass, from the viewpoint of processability. Moreover, it is preferably less than 50 parts by mass, more preferably less than 25 parts by mass, further preferably less than 10 parts by mass, from the viewpoint of abrasion resistance. Besides, in the present specification, the content of oil also comprises an amount of oil contained in an oil-extended rubber.

The liquid rubber is not particularly limited as long as it is a polymer that is in a liquid state at room temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably greater than 1 part by mass, more preferably greater than 3 parts by mass, further preferably greater than 5 parts by mass, particularly preferably greater than 7 parts by mass. Moreover, the content of the liquid rubber is preferably less than 50 parts by mass, more preferably less than 25 parts by mass, further preferably less than 10 parts by mass.

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

(Wax)

A content of wax when compounded based on 100 parts by mass of the rubber component is preferably greater than 0.5 parts by mass, more preferably greater than 1.0 part by mass, from the viewpoint of weather resistance of a rubber. Moreover, it is preferably less than 10 parts by mass, more preferably less than 5 parts by mass, from the viewpoint of prevention of whitening of a tire due to bloom.

(Processing aid)

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1.0 part by mass, from the viewpoint of exhibiting an effect of improving processability. Moreover, it is preferably less than 10 parts by mass, more preferably less than 8 parts by mass, from the viewpoints of abrasion resistance and breaking strength.

(Antioxidant)

Examples of the antioxidant include, but not particularly limited to, for example, amine-based, quinoline-based, quinone-based, phenol-based, and imidazole-based compounds, and antioxidants such as a carbamic acid metal salt, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine; and a quinoline-based antioxidant such as 2,2,4-trimethyl-1,2-dihydroquinoline polymer and 6-ethoxy-2,2,4-trimethyl-1,2-dihydroquinoline are preferable. These antioxidants may be used alone, or two or more thereof may be used in combination.

A content of the antioxidant when compounded based on 100 parts by mass of the rubber component is preferably greater than 0.5 parts by mass, more preferably greater than 1.0 part by mass, further preferably greater than 1.5 parts by mass, from the viewpoint of ozone crack resistance of a rubber. Moreover, it is preferably less than 10.0 parts by mass, more preferably less than 5.0 parts by mass, from the viewpoints of abrasion resistance and wet grip performance.

(Stearic acid)

A content of stearic acid when compounded based on 100 parts by mass of the rubber component is preferably greater than 0.5 parts by mass, more preferably 1.0 part by mass or more, further preferably greater than 1.5 parts by mass, from the viewpoint of processability. Moreover, it is preferably less than 10.0 parts by mass, more preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 part by mass, further preferably greater than 1.5 part by mass, from the viewpoint of processability. Moreover, it is preferably less than 10.0 parts by mass, more preferably less than 5.0 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably greater than 0.1 parts by mass, more preferably greater than 0.3 part by mass, further preferably greater than 0.5 part by mass, from the viewpoint of securing a sufficient vulcanization reaction. Moreover, it is preferably less than 3.0 parts by mass, more preferably less than 1.5 parts by mass, further preferably 1.25 parts by mass or less, further preferably 1 part by mass or less, from the viewpoint of prevention of deterioration. Besides, a content of the vulcanizing-agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexan, and the like. As these vulcanizing agents other than sulfur, those commercially available from Taoka Chemical Co., Ltd., LANXESS, Flexsys, etc. can be used.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, and the sulfenamide-based vulcanization accelerator is more preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably greater than 1.0 part by mass, more preferably 1. 25 parts by mass or more. Moreover, the content of the vulcanization accelerator based on 100 parts by mass of the rubber component is preferably less than 8.0 parts by mass, more preferably less than 6.0 parts by mass, further preferably less than 3.0 parts by mass. When the content of the vulcanization accelerator is within the above-described ranges, breaking strength and elongation tend to be secured.

[Tire]

The tire of the present invention is a tire comprising a predetermined tread composed of the above-described rubber composition, the tread comprising two or more rubber layers.

The tire of the present invention will be described below by appropriately using the drawings. However, the drawings are merely for illustration. A tire 1 of one embodiment of the present invention shown in FIG. 1 is a tire having a tread 3 that at least comprises a first layer 4 whose outer surface constitutes a tread surface 2 and a second layer 5 located on the innermost side in a tire radial direction, the first layer 4 being composed of the above-described rubber composition. Here, as shown in FIG. 1, the second layer 5 is located on the outer side of a belt layer 6 in the tire radial direction and is adjacent to the belt layer 6. Moreover, a thickness of the tread defined above is denoted by H, and furthermore, a thickness of the tread first layer is denoted by H1, and a thickness of the tread second layer is denoted by H2.

Another embodiment of the tire of the present invention is a tire comprising a tread, the tread comprising a first layer whose outer surface constitutes a tread surface, a second layer located on the innermost side in a tire radial direction, and further at least one intermediate layer between the first layer and the second layer, the first layer being composed of the above-described rubber composition. Here, the intermediate layer may be one consisting of two layers, or one consisting of three or more layers. Furthermore, the intermediate layer may be one consisting of four layers, or one consisting of five layers.

Another embodiment of the tire of the present invention is a tire comprising a tread, the tread comprising a first layer whose outer surface constitutes a tread surface, a second layer located on the innermost side in a tire radial direction, and further at least one intermediate layer between the first layer and the second layer, at least one of the first layer, the second layer and the intermediate layer being composed of the above-described rubber composition. Here, the intermediate layer may be one consisting of two layers, or one consisting of three or more layers. Furthermore, the intermediate layer may be one consisting of four layers, or one consisting of five layers.

In the case where, in the tire of the present invention, the first layer of the tread is composed of a rubber composition of the present invention, when a land ratio (%) of a tread surface is defined as C, a content (part by mass) $A_1$ of particulate carbon black based on 100 parts by mass of a rubber component of the first layer and C preferably satisfy the following inequality (2).

$$A_1 \times C < 6000 \qquad (2)$$

The right side of the above-described inequality (2) is preferably 5000, more preferably 4500, further preferably 4000, further preferably 3000. On the other hand, a lower limit of $A_1 \times C$ may be, but not particularly limited to, for example, about 1000, 1500, or 2000.

In the case where any rubber layer of the tread is composed of a rubber composition of the present invention in the tire of the present invention, when a thickness (mm) of the rubber layer is defined as D, a content (part by mass) A of particulate carbon black based on 100 parts by mass of a rubber component of the rubber layer and D preferably satisfy the following inequality (3).

$$A \times D < 2000 \qquad (3)$$

The right side of the above-described inequality (3) is preferably 1500, more preferably 1200, further preferably 1100, further preferably 1000, further preferably 650, further preferably 600, further preferably 500, further preferably 400, further preferably 300. On the other hand, a lower limit of A × D may be, but not particularly limited to, for example, about 100 or 200.

In the case where, in the tire of the present invention, the first layer of the tread and the intermediate layer adjacent to the first layer are composed of the rubber composition of the present invention, when a content (part by mass) of particulate carbon black based on 100 parts by mass of the rubber component of the first layer is defined as $A_1$ and a content (part by mass) of particulate carbon black based on 100 parts by mass of the rubber component of the intermediate layer adjacent to the first layer is defined as $A_m$, $A_1$ and $A_m$ preferably satisfy the following inequality (4),

$$A_m / A_1 < 1.00 \qquad (4)$$

(provided that $A_m$ is 20 or more).

The right side of the above-described inequality (4) is preferably 0.98, more preferably 0.95, further preferably 0.80, further preferably 0.75, further preferably 0.70, further preferably 0.65, further preferably 0.60, further preferably 0.56. On the other hand, a lower limit of $A_m$ / $A_1$ may be, but not particularly limited to, for example, about 0.50.

In the case where, in the tire of the present invention, the first layer of the tread and the intermediate layer adjacent to the first layer are composed of the rubber composition of the present invention, when a content (part by mass) of silica based on 100 parts by mass of the rubber component of the first layer is defined as $B_1$ and a content (part by mass) of silica based on 100 parts by mass of the rubber component of the intermediate layer adjacent to the first layer is defined as $B_m$, $B_1$ and $B_m$ preferably satisfy the following inequality (5),

$$B_m / B_1 < 1.00 \qquad (5)$$

(provided that $B_m$ is 8 or more).

The right side of the above-described inequality (5) is preferably 0.90, more preferably 0.60, further preferably 0.55, further preferably 0.51, further preferably 0.40, further preferably 0.35, further preferably 0.31, further preferably 0.30. On the other hand, a lower limit of $B_m$ / $B_1$ may be, but not particularly limited to, for example, about 0.10.

(Land ratio)

In the tire of the present invention, the land ratio (%) C is preferably greater than 60%, more preferably greater than 70%, further preferably greater than 80%, further preferably greater than 85%. Moreover, the C is preferably less than 93%, more preferably less than 91%.

(Thickness of each layer)

In the present invention, the thickness (mm) D of the rubber layer is preferably within a predetermined range. For example, in the case where the tire of the present invention comprises a tread consisting of a first layer and a second layer, a thickness of the first layer is preferably greater than 16 mm, more preferably greater than 18 mm, further preferably greater than 20 mm. On the other hand, the thickness of the first layer is preferably less than 28 mm, more preferably less than 26 mm, further preferably less than 24 mm. Moreover, a thickness of the second layer is preferably greater than 0.5 mm, more preferably greater than 1.0 mm, further preferably greater than 1.5 mm. On the other hand, the thickness of the second layer is preferably less than 3.5 mm, more preferably less than 3.0 mm, further preferably less than 2.5 mm.

In the case where the tire of the present invention comprises a tread consisting of a first layer, an intermediate layer, and a second layer, a thickness of the first layer is preferably greater than 8 mm, more preferably greater than 9

mm, further preferably greater than 10 mm. On the other hand, the thickness of the first layer is preferably less than 14 mm, more preferably less than 13 mm, further preferably less than 12 mm. Moreover, a thickness of the intermediate layer is preferably greater than 8 mm, more preferably greater than 9 mm, further preferably greater than 10 mm. On the other hand, the thickness of the intermediate layer is preferably less than 14 mm, more preferably less than 13 mm, further preferably less than 12 mm. Furthermore, a thickness of the second layer is preferably greater than 0.5 mm, more preferably greater than 1.0 mm, further preferably greater than 1.5 mm. On the other hand, the thickness of the second layer is preferably less than 3.5 mm, more preferably less than 3.0 mm, further preferably less than 2.5 mm.

[Intended use]

The tire according to the present invention is a tire comprising a tread that consists of two rubber layers or three or more rubber layers, and can be appropriately used as a pneumatic tire although the tire may be a pneumatic tire or a non-pneumatic tire. Moreover, the tire of the present invention can be used for multiple applications, such as a tire for a passenger car, a heavy-duty tire such as for a truck/bus, a tire for a two-wheeled vehicle, and a high-performance tire, and particularly, the tire of the present invention is appropriately used as a heavy-duty tire. The heavy-duty tire is a tire not only for large trucks and buses but also for small trucks, buses, vans, and the like, and the heavy-duty tire is a tire having a maximum load capacity greater than 1000 kg. In a case where the heavy-duty tire is used as a tire for large vehicles, the heavy-duty tire is preferably a tire having a maximum load capacity of 1400 kg or more. Moreover, in a case where the heavy-duty tire is used as a tire for small vehicles, a cord of a belt reinforcement layer and/or a carcass is preferably a textile cord.

[Production method]

<Production of rubber composition>

The rubber composition of the present invention can be produced by a known method. For example, it can be produced by kneading the above-described components with a rubber kneading machine such as an open roll or a sealed type kneader (a Banbury mixer, a kneader, and the like). A kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary. Examples of a kneading condition include, but not particularly limited to, for example, a method of kneading at a discharge temperature of 150 °C to 170 °C for 3 to 10 minutes in the base kneading step and kneading at 50°C to 110 °C for 1 to 5 minutes in the final kneading step.

<Production of tire>

A rubber composition obtained by compounding the above-described components is extruded into a shape of each of desired layers of a tread with the rubber composition remaining unvulcanized, and is molded together with other tire members on a tire forming machine in a usual method, so that an unvulcanized tire can be produced. A tire of the present invention can be obtained by heating and pressurizing (vulcanizing) this unvulcanized tire in a vulcanizing machine. Examples of a vulcanization condition include, but not particularly limited to, for example, a method of vulcanizing at 150 to 200°C for 5 to 30 minutes.

EXAMPLES

Hereinafter, Examples (embodied examples) considered to be preferable in implementing the present invention will be described, though the scope of the present invention is not limited to only these Examples. Tires obtained using various chemicals described below in accordance with each table are tested, and results calculated based on the following evaluation method are shown as abrasion resistance indexes in a lower part of each table.

[Example and Comparative example]

<Various chemicals>

Various chemicals used in Examples and Comparative examples are collectively shown below.

NR: TSR 20

SBR1: SBR1502 manufactured by ARLANXEO. (styrene content: 23.5% by mass, vinyl content: 18 mol%, Mw: 500,000)

BR: BUNA CB24 manufactured by ARLANXEO. (BR synthesized using a Nd-based catalyst, cis content: 96 mol%, vinyl content: 0.7 mol%, Mw: 500,000)

Carbon black 1: SHOW BLACK N134 manufactured by Cabot Japan K.K. ($N_2SA$: 148 $m^2/g$, average primary particle size: 18 nm)

Carbon black 2: N220 manufactured by BIRLA CARBON BRASIL LTDA. ($N_2SA$: 115 $m^2/g$, average primary particle size: 22 nm)

Silica: TOKUSIL USG-A manufactured by OSC Siam Silica Co., Ltd. ($N_2SA$: 175 $m^2/g$)

Silane coupling agent: Si266 manufactured by Evonik Degussa GmbH (bis(3-triethoxysilylpropyl)disulfide)

Resin component 1: UNILEN A-100 manufactured by Braskem (aromatic petroleum resin, softening point: 96 to 105°C (the softening point is measured according to ASTM D6943))

Resin component 2: YS RESIN TO-125 manufactured by YASUHARA CHEMICAL CO., LTD. (aromatic modified terpene resin, softening point: 125°C)

Resin component 3: HARISTER P manufactured by Harima Chemicals, Inc. (esterified rosin resin, softening point: 102°C)

Oil: Diana process oil PA32 manufactured by Idemitsu Kosan Co., Ltd.

Zinc oxide: Zinc oxide No. 2 manufactured by Mitsui Mining & Smelting Co., Ltd.

Antioxidant: Nocrac 6C manufactured by Ouchi Shinko Chemical Industry Co., Ltd. (N-(1,3-dimethylbutyl)-N'-phenyl-p-phenylenediamine)

Stearic acid: Bead stearic acid "CAMELLIA" manufactured by NOF CORPORATION

Wax: Sunnoc N manufactured by Ouchi Shinko Chemical Industry Co., Ltd.

Sulfur: Powdered sulfur manufactured by Karuizawa Sulfur Co, Ltd.

Vulcanization accelerator: Nocceler NS-P manufactured by Ouchi Shinko Chemical Industry Co., Ltd. (N-tert-butyl-2-benzothiazolylsulfenamide)

<Unvulcanized rubber composition>

According to the compounding formulations shown in Table 1, using a 1.7 L closed Banbury mixer, all chemicals other than sulfur and a vulcanization accelerator are kneaded for 1 to 10 minutes until the temperature reaches a discharge temperature of 150 °C to 160 °C, to obtain a kneaded product. Next, using a twin-screw open roll, sulfur and a vulcanization accelerator are added to the obtained kneaded product, and the mixture is kneaded for 4 minutes until the temperature reaches 105 °C, to obtain an unvulcanized rubber composition.

<Tire of two-layer tread>

According to Table 2, the unvulcanized rubber compositions are molded into shapes of a first layer (thickness: 22.0 mm) and a second layer (thickness: 2.0 mm) of a tread and attached together with other tire members to produce an unvulcanized tire, and the unvulcanized tire is vulcanized at 170°C, thereby obtaining each test tire (size: 12R22.5, tire for truck/bus).

<Tire comprising three-layer tread>

According to Tables 3 to 5, the unvulcanized rubber compositions are molded into shapes of a first layer (thickness: 11.0 mm), an intermediate layer (thickness: 11.0 mm), and a second layer (thickness: 2.0 mm) of a tread and attached together with other tire members to produce an unvulcanized tire, and the unvulcanized tire is vulcanized at 170°C, thereby obtaining each test tire (size: 12R22.5, tire for truck/bus).

(Method of evaluation on abrasion resistance)

Each test tire is rim-assembled to a rim (7.50 × 22.5), and the internal pressure is adjusted to 750 kPa. This tire is mounted on a drive wheel of a test vehicle (2-D truck). This test vehicle (loading capacity: 8 tons) is made to run on a bad road of an unpaved road on which gravel and sand intermingle with each other, and abrasion resistance is evaluated. An abrasion loss is measured at a point when a running distance reaches 45,000 km (which corresponds to an abrasion rate of 30%). An inverse value of the abrasion loss is indicated with reference examples (Comparative examples 1, 8, 15, and 16) being as 100. A greater numerical value means less abrasion loss and better abrasion resistance.

Table 1-1

| | a1 | a2 | a3 | a4 | a5 | a6 | a7 |
|---|---|---|---|---|---|---|---|
| Compounding amount (part by mass) | | | | | | | |
| NR | 70 | 70 | 70 | 70 | 70 | 80 | 98 |
| SBR 1 | 15 | 15 | 15 | 15 | 15 | 10 | 1 |
| BR | 15 | 15 | 15 | 15 | 15 | 10 | 1 |
| Carbon black 1 | 27.5 | 49 | 49 | 49 | 49 | 46 | 52 |
| Carbon black 2 | - | - | - | - | - | - | - |
| Silica | 27.5 | 6 | 6 | 6 | 6 | 9 | 3 |
| (ratio of silica in filler) | 0.50 | 0.11 | 0.11 | 0.11 | 0.11 | 0.16 | 0.05 |
| Silane coupling agent | 2.75 | 0.60 | 0.60 | 0.60 | 0.60 | 0.90 | 0.30 |
| Resin component 1 | - | - | 1.5 | - | - | - | - |
| Resin component 2 | - | - | - | 1.5 | - | - | - |
| Resin component 3 | - | - | - | - | 1.5 | - | - |
| Oil | - | - | - | - | | - | - |
| Zinc oxide | 3 | 3 | 3 | 3 | 3 | 3 | 3 |
| Antioxidant | 2 | 2 | 2 | 2 | 2 | 2 | 2 |
| Stearic acid | 2.5 | 2.5 | 2.5 | 2.5 | 2.5 | 2.5 | 2.5 |
| Wax | 1.35 | 1.35 | 1.35 | 1.35 | 1.35 | 1.35 | 1.35 |
| Sulfur | 1.00 | 1.00 | 1.00 | 1.00 | 1.00 | 0.95 | 0.95 |
| Vulcanization accelerator | 1.25 | 1.25 | 1.25 | 1.25 | 1.25 | 1.25 | 1.25 |

| | b1 | b2 | b3 | b4 | b5 | b6 | b7 | c | d |
|---|---|---|---|---|---|---|---|---|---|
| Compounding amount (part by mass) | | | | | | | | | |
| NR | 70 | 70 | 100 | 85 | 85 | 100 | 85 | 70 | 100 |
| SBR 1 | 15 | 15 | | | 15 | - | - | - | - |
| BR | 15 | 15 | - | 15 | - | - | 15 | 30 | - |
| Carbon black 1 | | | 27.5 | 27.5 | 27.5 | 27.5 | 27.5 | | |
| Carbon black 2 | | 27.5 | | | | | | 40 | 35 |
| Silica | 55 | 27.5 | 27.5 | 27.5 | 27.5 | 27.5 | 27.5 | | 5 |
| (ratio of silica in filler) | 1.00 | 0.50 | 0.50 | 0.50 | 0.50 | 0.50 | 0.50 | 0.00 | 0.13 |
| Silane coupling agent | 5.50 | 2.75 | 2.75 | 2.75 | 2.75 | 2.75 | 2.75 | - | 0.05 |
| Resin component 1 | - | - | - | - | - | 1.5 | 1.5 | - | - |
| Resin component 2 | - | - | - | - | - | - | - | - | - |
| Resin component 3 | - | - | - | - | - | - | - | - | - |
| Oil | - | - | - | - | - | - | - | 8 | - |
| Zinc oxide | 3 | 3 | 3 | 3 | 3 | 3 | 3 | 2 | 3.5 |
| Antioxidant | 2 | 2 | 2 | 2 | 2 | 2 | 2 | 3 | 1.5 |
| Stearic acid | 2.5 | 2.5 | 2.5 | 2.5 | 2.5 | 2.5 | 2.5 | 2 | 2 |
| Wax | 1.35 | 1.35 | 1.35 | 1.35 | 1.35 | 1.35 | 1.35 | 2 | 0 |
| Sulfur | 1.00 | 1.00 | 1.00 | 1.00 | 1.00 | 1.00 | 1.00 | 1.50 | 2.50 |
| Vulcanization accelerator | 1.25 | 1.25 | 1.25 | 1.25 | 1.25 | 1.25 | 1.25 | 1.50 | 1.50 |

Table 1-2

| | a8 | a9 | a10 | a11 |
|---|---|---|---|---|
| Compounding amount (part by mass) | | | | |
| NR | 70 | 70 | 80 | 80 |
| SBR 1 | 15 | 15 | 10 | 10 |
| BR | 15 | 15 | 10 | 10 |
| Carbon black 1 | 44 | 44 | 32 | 24 |
| Carbon black 2 | - | - | - | - |
| Silica | 10 | 10 | 5 | 3 |
| (ratio of silica in filler) | 0.19 | 0.19 | 0.14 | 0.11 |
| Silane coupling agent | 1.00 | 1.00 | 0.50 | 0.30 |
| Resin component 1 | - | 1.5 | - | - |
| Resin component 2 | - | - | - | - |
| Resin component 3 | - | - | - | - |
| Oil | - | - | - | - |
| Zinc oxide | 3 | 3 | 3 | 3 |
| Antioxidant | 2 | 2 | 2 | 2 |
| Stearic acid | 2.5 | 2.5 | 2.5 | 2.5 |
| Wax | 1.35 | 1.35 | 1.35 | 1.35 |
| Sulfur | 1.00 | 1.00 | 0.95 | 0.95 |
| Vulcanization accelerator | 1.25 | 1.25 | 1.25 | 1.25 |

Table 2

| | Example | | | | | | |
|---|---|---|---|---|---|---|---|
| | 1 | 2 | 3 | 4 | 5 | 6 | 7 |
| Tread | | | | | | | |
| First layer | a1 | a2 | a3 | a3 | a4 | a5 | a6 |
| Content of particulate CB (part by mass) ($A_1$) | 27.5 | 49.0 | 49.0 | 49.0 | 49.0 | 49.0 | 46.0 |
| Content of silica (part by mass) ($B_1$) | 27.5 | 6.0 | 6.0 | 6.0 | 6.0 | 6.0 | 9.0 |
| Land ratio (%) (C) | 85 | 85 | 85 | 60 | 85 | 85 | 85 |
| Thickness (mm) ($D_1$) | 22 | 22 | 22 | 22 | 22 | 22 | 22 |
| Inequality (1) $B_1 / (A_1 + B_1)$ | 0.50 | 0.11 | 0.11 | 0.11 | 0.11 | 0.11 | 0.16 |
| Inequality (2) $A_1 \times C$ | 2337.5 | 4165 | 4165 | 2940 | 4165 | 4165 | 3910 |
| Inequality (3) $A_1 \times D_1$ | 605 | 1078 | 1078 | 1078 | 1078 | 1078 | 1012 |
| Second layer | d | d | d | d | d | d | d |
| Thickness (mm) ($D_2$) | 2 | 2 | 2 | 2 | 2 | 2 | 2 |
| Abrasion resistance index | 105 | 132 | 132 | 105 | 126 | 126 | 126 |

| | Comparative example | | | | | | |
|---|---|---|---|---|---|---|---|
| | 1 | 2 | 3 | 4 | 5 | 6 | 7 |
| Tread | | | | | | | |
| First layer | b4 | b1 | b2 | b3 | b5 | b6 | b7 |
| Content of particulate CB (part by mass) ($A_1$) | 27.5 | 0.0 | 0.0 | 27.5 | 27.5 | 27.5 | 27.5 |
| Content of silica (part by mass) ($B_1$) | 27.5 | 55.0 | 27.5 | 27.5 | 27.5 | 27.5 | 27.5 |

(continued)

| | Comparative example | | | | | | |
|---|---|---|---|---|---|---|---|
| | 1 | 2 | 3 | 4 | 5 | 6 | 7 |
| Land ratio (%) (C) | 85 | 85 | 85 | 85 | 85 | 85 | 85 |
| Thickness (mm) ($D_1$) | 22 | 22 | 22 | 22 | 22 | 22 | 22 |
| Inequality (1) $B_1 / (A_1 + B_1)$ | 0.50 | 1.00 | 1.00 | 0.50 | 0.50 | 0.50 | 0.50 |
| Inequality (2) $A_1 \times C$ | 2337.5 | 0 | 0 | 2337.5 | 2337.5 | 2337.5 | 2337.5 |
| Inequality (3) $A_1 \times D_1$ | 605 | 0 | 0 | 605 | 605 | 605 | 605 |
| Second layer | d | d | d | d | d | d | d |
| Thickness (mm) ($D_2$) | 2 | 2 | 2 | 2 | 2 | 2 | 2 |
| Abrasion resistance index | 100 | 74 | 95 | 95 | 95 | 95 | 100 |

Table 3-1

| | Example | | | | | |
|---|---|---|---|---|---|---|
| | 8 | 9 | 10 | 11 | 12 | 13 |
| Tread | | | | | | |
| First layer | a1 | a2 | a3 | a3 | a1 | a3 |
| Content of particulate CB (part by mass) ($A_1$) | 27.5 | 49.0 | 49.0 | 49.0 | 27.5 | 49.0 |
| Content of silica (part by mass) ($B_1$) | 27.5 | 6.0 | 6.0 | 6.0 | 27.5 | 6.0 |
| Land ratio (%) (C) | 85 | 85 | 85 | 60 | 85 | 85 |
| Thickness (mm) ($D_1$) | 11 | 11 | 11 | 11 | 11 | 11 |
| Inequality (1) $B_1 / (A_1 + B_1)$ | 0.50 | 0.11 | 0.11 | 0.11 | 0.50 | 0.11 |
| Inequality (2) $A_1 \times C$ | 2337.5 | 4165 | 4165 | 2940 | 2337.5 | 4165 |
| Inequality (3) $A_1 \times D_1$ | 302.5 | 539 | 539 | 539 | 302.5 | 539 |
| Intermediate layer | c | c | c | c | a6 | a6 |
| Content of particulate CB (part by mass) ($A_m$) | 0.0 | 0.0 | 0.0 | 0.0 | 46.0 | 46.0 |
| Content of silica (part by mass) ($B_m$) | 0.0 | 0.0 | 0.0 | 0.0 | 9.0 | 9.0 |
| Thickness (mm) ($D_m$) | 11 | 11 | 11 | 11 | 11 | 11 |
| Inequality (1) $B_m / (A_m + B_m)$ | - | - | - | - | 0.16 | 0.16 |
| Inequality (3) $A_m \times D_m$ | 0 | 0 | 0 | 0 | 506 | 506 |
| Second layer | d | d | d | d | d | d |
| Thickness (mm) ($D_2$) | 2 | 2 | 2 | 2 | 2 | 2 |
| Inequality (4) $A_m / A_1$ | 0.00 | 0.00 | 0.00 | 0.00 | 1.67 | 0.94 |
| Inequality (5) $B_m / B_1$ | 0.00 | 0.00 | 0.00 | 0.00 | 0.33 | 1.50 |
| Abrasion resistance index | 105 | 132 | 132 | 105 | 111 | 137 |

| | Comparative example | | | | | | |
|---|---|---|---|---|---|---|---|
| | 8 | 9 | 10 | 11 | 12 | 13 | 14 |
| Tread | | | | | | | |
| First layer | b4 | b1 | b2 | b3 | b5 | b6 | b7 |
| Content of particulate CB (part by mass) ($A_1$) | 27.5 | 0.0 | 0.0 | 27.5 | 27.5 | 27.5 | 27.5 |
| Content of silica (part by mass) ($B_1$) | 27.5 | 55.0 | 27.5 | 27.5 | 27.5 | 27.5 | 27.5 |

(continued)

| | Comparative example | | | | | | |
|---|---|---|---|---|---|---|---|
| | 8 | 9 | 10 | 11 | 12 | 13 | 14 |
| Land ratio (%) (C) | 85 | 85 | 85 | 85 | 85 | 85 | 85 |
| Thickness (mm) ($D_1$) | 11 | 11 | 11 | 11 | 11 | 11 | 11 |
| Inequality (1) $B_1$ / ($A_1$ + $B_1$) | 0.50 | 1.00 | 1.00 | 0.50 | 0.50 | 0.50 | 0.50 |
| Inequality (2) $A_1 \times C$ | 2337.5 | 0 | 0 | 2337.5 | 2337.5 | 2337.5 | 2337.5 |
| Inequality (3) $A_1 \times D_1$ | 302.5 | 0 | 0 | 302.5 | 302.5 | 302.5 | 302.5 |
| Intermediate layer | c | c | c | c | c | c | c |
| Content of particulate CB (part by mass) ($A_m$) | 0.0 | 0.0 | 0.0 | 0.0 | 0.0 | 0.0 | 0.0 |
| Content of silica (part by mass) ($B_m$) | 0.0 | 0.0 | 0.0 | 0.0 | 0.0 | 0.0 | 0.0 |
| Thickness (mm) (Dm) | 11 | 11 | 11 | 11 | 11 | 11 | 11 |
| Inequality (1) $B_m$ / ($A_m$ +$B_m$) | - | - | - | - | - | - | - |
| Inequality (3) $A_m \times D_m$ | 0 | 0 | 0 | 0 | 0 | 0 | 0 |
| Second layer | d | d | d | d | d | d | d |
| Thickness (mm) ($D_2$) | 2 | 2 | 2 | 2 | 2 | 2 | 2 |
| Inequality (4) $A_m$ / $A_1$ | 0.00 | - | - | 0.00 | 0.00 | 0.00 | 0.00 |
| Inequality (5) $B_m$ / $B_1$ | 0.00 | 0.00 | 0.00 | 0.00 | 0.00 | 0.00 | 0.00 |
| Abrasion resistance index | 100 | 74 | 95 | 95 | 95 | 95 | 100 |

Table 3-2

| | Example | | | |
|---|---|---|---|---|
| | 14 | 15 | 16 | 17 |
| Tread | | | | |
| First layer | a8 | a8 | a9 | a9 |
| Content of particulate CB (part by mass) ($A_1$) | 44.0 | 44.0 | 44.0 | 44.0 |
| Content of silica (part by mass) ($B_1$) | 10.0 | 10.0 | 10.0 | 10.0 |
| Land ratio (%) (C) | 85 | 85 | 85 | 85 |
| Thickness (mm) ($D_1$) | 11 | 11 | 11 | 11 |
| Inequality (1) $B_1$ / ($A_1$ + $B_1$) | 0.19 | 0.19 | 0.19 | 0.19 |
| Inequality (2) $A_1 \times C$ | 3740 | 3740 | 3740 | 3740 |
| Inequality (3) $A_1 \times D_1$ | 484 | 484 | 484 | 484 |
| Intermediate layer | a10 | a11 | a10 | a11 |
| Content of particulate CB (part by mass) ($A_m$) | 32.0 | 24.0 | 32.0 | 24.0 |
| Content of silica (part by mass) ($B_m$) | 5.0 | 3.0 | 5.0 | 3.0 |
| Thickness (mm) ($D_m$) | 11 | 11 | 11 | 11 |
| Inequality (1) $B_m$ / ($A_m$ + $B_m$) | 0.14 | 0.11 | 0.14 | 0.11 |
| Inequality (3) $A_m \times D_m$ | 352 | 264 | 352 | 264 |
| Second layer | d | d | d | d |
| Thickness (mm) ($D_2$) | 2 | 2 | 2 | 2 |
| Inequality (4) $A_m$ / $A_1$ | 0.73 | 0.55 | 0.73 | 0.55 |
| Inequality (5) $B_m$ / $B_1$ | 0.50 | 0.30 | 0.50 | 0.30 |

(continued)

| | Example | | | |
|---|---|---|---|---|
| | 14 | 15 | 16 | 17 |
| Abrasion resistance index | 146 | 155 | 147 | 157 |

Table 4

| | Example | Comparative example |
|---|---|---|
| | 18 | 15 |
| Tread | | |
| First layer | b1 | b1 |
| Content of particulate CB (part by mass) ($A_1$) | 0.0 | 0.0 |
| Content of silica (part by mass) ($B_1$) | 55.0 | 55.0 |
| Land ratio (%) (C) | 85.0 | 85.0 |
| Thickness (mm) ($D_1$) | 11 | 11 |
| Inequality (1) $B_1 / (A_1 + B_1)$ | 1.00 | 1.00 |
| Inequality (2) $A_1 \times C$ | 0 | 0 |
| Inequality (3) $A_1 \times D_1$ | 0 | 0 |
| Intermediate layer | a6 | c |
| Content of particulate CB (part by mass) ($A_m$) | 46.0 | 0.0 |
| Content of silica (part by mass) ($B_m$) | 9.0 | 0.0 |
| Thickness (mm) ($D_m$) | 11 | 11 |
| Inequality (1) $B_m / (A_m + B_m)$ | 0.16 | |
| Inequality (3) $A_m \times D_m$ | 506 | 0 |
| Second layer | d | d |
| Content of particulate CB (part by mass) (A2) | 0.0 | 0.0 |
| Content of silica (part by mass) ($B_2$) | 5.0 | 5.0 |
| Thickness (mm) ($D_2$) | 2 | 2 |
| Inequality (1) $B_2 / (A_2 + B_2)$ | 1.00 | 1.00 |
| Inequality (3) $A_2 \times D_2$ | 0 | 0 |
| Inequality (4) $A_m / A_1$ | - | - |
| Inequality (5) $B_m / B_1$ | 0.16 | 0.00 |
| Abrasion resistance index | 105 | 100 |

Table 5

| | Example | Comparative example |
|---|---|---|
| | 19 | 16 |
| Tread | | |
| First layer | b1 | b1 |
| Content of particulate CB (part by mass) ($A_1$) | 0.0 | 0.0 |
| Content of silica (part by mass) ($B_1$) | 55.0 | 55.0 |
| Land ratio (%) (C) | 85.0 | 85.0 |
| Thickness (mm) ($D_1$) | 11 | 11 |
| Inequality (1) $B_1 / (A_1 + B_1)$ | 1.00 | 1.00 |
| Inequality (2) $A_1 \times C$ | 0 | 0 |
| Inequality (3) $A_1 \times D_1$ | 0 | 0 |
| Intermediate layer | c | c |
| Content of particulate CB (part by mass) ($A_m$) | 0.0 | 0.0 |
| Content of silica (part by mass) ($B_m$) | 0.0 | 0.0 |
| Thickness (mm) ($D_m$) | 11 | 11 |
| Inequality (1) $B_m / (A_m + B_m)$ | | |
| Inequality (3) $A_m \times D_m$ | 0 | 0 |
| Second layer | a7 | d |
| Content of particulate CB (part by mass) (A2) | 52 | 0.0 |
| Content of silica (part by mass) ($B_2$) | 3.0 | 5.0 |
| Thickness (mm) ($D_2$) | 2 | 2 |
| Inequality (1) $B_2 / (A_2 + B_2)$ | 0.05 | 1.00 |
| Inequality (3) $A_2 \times D_2$ | 104 | 0.00 |
| Inequality (4) $A_m / A_1$ | - | - |
| Inequality (5) $B_m / B_1$ | 0.00 | 0.00 |
| Abrasion resistance index | 105 | 100 |

REFERENCE SIGNS LIST

1 Tire
2 Tread surface
3 Tread
4 First layer
5 Second layer
6 Breaker

H Thickness of tread
H1 Thickness of first layer of tread
H2 Thickness of second layer of tread
C Tire center line

**Claims**

1. A rubber composition comprising

a rubber component comprising an isoprene-based rubber, a butadiene rubber, and a styrene-butadiene rubber, and
a filler comprising particulate carbon black and silica,
wherein an average primary particle size of the particulate carbon black is 19 nm or less,
wherein, when a content (part by mass) of the particulate carbon black based on 100 parts by mass of the rubber component is defined as A and a content (part by mass) of the silica based on 100 parts by mass of the rubber component is defined as B, A and B satisfy the inequality (1) described below

$$B / (A + B) < 0.50 \quad (1),$$

wherein the average primary particle size of carbon black is calculated by measuring 400 or more primary particles observed in the field of view with a transmission electron microscope and calculating an arithmetic average of them.

2. The rubber composition of claim 1, further comprising a resin component.

3. The rubber composition of claim 1 or 2, further comprising sulfur,
wherein a content of the sulfur based on 100 parts by mass of the rubber component is 1.25 parts by mass or less.

4. A tire comprising a tread, the tread at least comprising a first layer whose outer surface constitutes a tread surface and a second layer located on an innermost side in a tire radial direction,
wherein the first layer is composed of the rubber composition of any one of claims 1 to 3.

5. A tire comprising a tread, the tread comprising a first layer whose outer surface constitutes a tread surface, a second layer located on an innermost side in a tire radial direction, and further at least one intermediate layer between the first layer and the second layer,
wherein the first layer is composed of the rubber composition of any one of claims 1 to 3.

6. A tire comprising a tread, the tread comprising a first layer whose outer surface constitutes a tread surface, a second layer located on an innermost side in a tire radial direction, and further at least one intermediate layer between the first layer and the second layer,
wherein at least one of the first layer, the second layer, and the intermediate layer is composed of the rubber composition of any one of claims 1 to 3.

7. The tire of any one of claims 4 to 6, wherein, in the case where the first layer is composed of the rubber composition of any one of claims 1 to 3, when a land ratio of the tread surface is defined as C, a content (part by mass) $A_1$ of the particulate carbon black based on 100 parts by mass of the rubber component in the first layer and C satisfy the inequality (2) described below.

$$A_1 \times C < 6000 \quad (2)$$

8. The tire of any one of claims 4 to 7, wherein, in a rubber layer of the tread that is composed of the rubber composition of any one of claims 1 to 3, when a thickness (mm) of the rubber layer is defined as D, a content (part by mass) A of the particulate carbon black based on 100 parts by mass of the rubber component in the rubber layer and D satisfy the inequality (3) described below.

$$A \times D < 2000 \quad (3)$$

**9.** The tire of claim 5 in which an intermediate layer adjacent to the first layer among the at least one intermediate layer is composed of the rubber composition of any one of claims 1 to 3,
wherein, when a content (part by mass) of the particulate carbon black based on 100 parts by mass of the rubber component of the first layer is defined as $A_1$ and a content (part by mass) of the particulate carbon black based on 100 parts by mass of the rubber component of the intermediate layer adjacent to the first layer is defined as $A_m$, $A_1$ and $A_m$ satisfy the inequality (4) described below,

$$A_m / A_1 < 1.00 \quad (4)$$

(provided that $A_m$ is 20 or more).

**10.** The tire of claim 5 or 9 in which an intermediate layer adjacent to the first layer among the at least one intermediate layer is composed of the rubber composition of any one of claims 1 to 3,
wherein, when a content (part by mass) of the silica based on 100 parts by mass of the rubber component of the first layer is defined as $B_1$ and a content (part by mass) of the silica based on 100 parts by mass of the rubber component of the intermediate layer adjacent to the first layer is defined as $B_m$, $B_1$ and $B_m$ satisfy the inequality (5) described below,

$$B_m / B_1 < 1.00 \quad (5)$$

(provided that $B_m$ is 8 or more).

**11.** The tire of any one of claims 4 to 10, wherein the tire is a heavy-duty tire.

**Patentansprüche**

**1.** Kautschukzusammensetzung, umfassend

eine Kautschukkomponente, die einen Isopren-basierten Kautschuk, einen Butadienkautschuk und einen Styrol-Butadien-Kautschuk umfasst, und
einen Füllstoff, der partikelförmigen Ruß und Siliziumdioxid umfasst,
wobei eine mittlere Primärpartikelgröße des partikelförmigen Rußes 19 nm oder weniger beträgt,
wobei, wenn ein Gehalt (Massenteile) des teilchenförmigen Rußes bezogen auf 100 Massenteile der Kautschukkomponente als A definiert ist, und ein Gehalt (Massenteile) des Siliziumdioxids bezogen auf 100 Massenteile der Kautschukkomponente als B definiert ist, A und B der nachstehend beschriebenen Ungleichung (1) genügen

$$B / (A + B) < 0{,}50 \quad (1),$$

wobei die mittlere Primärpartikelgröße von Ruß berechnet wird, indem 400 oder mehr Primärpartikel, die im Sichtfeld mit einem Transmissionselektronenmikroskop betrachtet werden, gemessen werden und ein arithmetisches Mittel von ihnen berechnet wird.

**2.** Kautschukzusammensetzung nach Anspruch 1, welche zudem eine Harzkomponente umfasst.

**3.** Kautschukzusammensetzung nach Anspruch 1 oder 2, welche zudem Schwefel umfasst,
wobei ein Gehalt des Schwefels bezogen auf 100 Massenteile der Kautschukkomponente 1,25 Massenteile oder weniger beträgt.

**4.** Reifen, umfassend einen Laufstreifen, wobei der Laufstreifen mindestens eine erste Schicht, deren äußere Oberfläche eine Laufstreifenoberfläche bildet, und eine zweite Schicht, die sich auf einer innersten Seite in einer Reifenradialrichtung befindet, umfasst,
wobei die erste Schicht mit der Kautschukzusammensetzung nach einem der Ansprüche 1 bis 3 aufgebaut ist.

**5.** Reifen, umfassend einen Laufstreifen, wobei der Laufstreifen eine erste Schicht, deren äußere Oberfläche eine Laufstreifenoberfläche bildet, eine zweite Schicht, die sich auf einer innersten Seite in einer Reifenradialrichtung befindet, und zudem mindestens eine Zwischenschicht zwischen der ersten Schicht und der zweiten Schicht umfasst, wobei die erste Schicht mit der Kautschukzusammensetzung nach einem der Ansprüche 1 bis 3 aufgebaut ist.

**6.** Reifen, umfassend einen Laufstreifen, wobei der Laufstreifen eine erste Schicht, deren äußere Oberfläche eine Laufstreifenoberfläche bildet, eine zweite Schicht, die sich auf einer innersten Seite in einer Reifenradialrichtung befindet, und zudem mindestens eine Zwischenschicht zwischen der ersten Schicht und der zweiten Schicht umfasst, wobei mindestens eine von der ersten Schicht, der zweiten Schicht und der Zwischenschicht mit der Kautschukzusammensetzung nach einem der Ansprüche 1 bis 3 aufgebaut ist.

**7.** Reifen nach einem der Ansprüche 4 bis 6, wobei in dem Fall, dass die erste Schicht mit der Kautschukzusammensetzung nach einem der Ansprüche 1 bis 3 aufgebaut ist, wenn ein Positivprofilanteil der Laufstreifenoberfläche als C definiert ist, ein Gehalt (Massenteile) $A_1$ des partikelförmigen Rußes bezogen auf 100 Massenteile der Kautschukkomponente in der ersten Schicht und C der nachstehend beschriebenen Ungleichung (2) genügen.

$$A1 \times C < 6000 \qquad (2)$$

**8.** Reifen nach einem der Ansprüche 4 bis 7, wobei, in einer Kautschukschicht des Laufstreifens, die mit der Kautschukzusammensetzung nach einem der Ansprüche 1 bis 3 aufgebaut ist, wenn eine Dicke (mm) der Kautschukschicht als D definiert ist, ein Gehalt (Massenteile) A des partikelförmigen Rußes bezogen auf 100 Massenteile der Kautschukkomponente in der Kautschukschicht und D der nachstehend beschriebenen Ungleichung (3) genügen.

$$A \times D < 2000 \qquad (3)$$

**9.** Reifen nach Anspruch 5, in welchem eine zu der ersten Schicht benachbarte Zwischenschicht von der mindestens einen Zwischenschicht mit der Kautschukzusammensetzung nach einem der Ansprüche 1 bis 3 aufgebaut ist, wobei, wenn ein Gehalt (Massenteile) des partikelförmigen Rußes bezogen auf 100 Massenteile der Kautschukzusammensetzung der ersten Schicht als $A_1$ definiert ist, und ein Gehalt (Massenteile) des partikelförmigen Rußes bezogen auf 100 Massenteile der Kautschukkomponente der zu der ersten Schicht benachbarten Zwischenschicht als $A_m$ definiert ist, $A_1$ und $A_m$ der nachstehend beschriebenen Ungleichung (4) genügen,

$$A_m / A_1 < 1{,}00 \qquad (4)$$

(vorausgesetzt, dass $A_m$ 20 oder mehr beträgt).

**10.** Reifen nach Anspruch 5 oder 9, in welchem eine zu der ersten Schicht benachbarte Zwischenschicht von der mindestens einen Zwischenschicht mit der Kautschukzusammensetzung nach einem der Ansprüche 1 bis 3 aufgebaut ist,
wobei, wenn ein Gehalt (Massenteile) des Siliziumdioxids bezogen auf 100 Massenteile der Kautschukkomponente der ersten Schicht als $B_1$ definiert ist, und ein Gehalt (Massenteile) des Siliziumdioxids bezogen auf 100 Massenteile der Kautschukkomponente der zu der ersten Schicht benachbarten Zwischenschicht als $B_m$ definiert ist, $B_1$ und $B_m$ der nachstehend beschriebenen Ungleichung (5) genügen,

$$B_m / B_1 < 1{,}00 \qquad (5)$$

(vorausgesetzt, dass $B_m$ 8 oder mehr beträgt).

**11.** Reifen nach einem der Ansprüche 4 bis 10, wobei der Reifen ein Schwerlastreifen ist.

## Revendications

1. Composition de caoutchouc, comprenant

   un composant de caoutchouc comprenant un caoutchouc à base d'isoprène, un caoutchouc de butadiène, et un caoutchouc de styrène-butadiène et
   une charge comprenant du noir de charbon particulaire et de la silice, dans laquelle une taille de particule primaire moyenne du noir de charbon particulaire est de 19 nm ou moins,
   dans laquelle, lorsqu'une teneur (parties en masse) du noir de charbon particulaire sur la base de 100 parties en masse du composant de caoutchouc est définie comme A et une teneur (parties en masse) de la silice sur la base de 100 parties en masse du composant de caoutchouc est définie comme B, A et B satisfont l'inégalité (1) décrite ci-dessous

   $$B / (A + B) < 0,50 \quad (1),$$

   dans laquelle la taille de particule primaire moyenne du noir de charbon est calculée en mesurant 400 ou plus particule primaires observées dans le champ de vision avec un microscope électronique à transmission et en calculant une de leurs moyennes arithmétiques.

2. Composition de caoutchouc selon la revendication 1, comprenant en outre un composant de résine.

3. Composition de caoutchouc selon la revendication 1 ou 2, comprenant en outre du soufre,
   dans laquelle une teneur du soufre sur la base de 100 parties en masse du composant de caoutchouc est de 1,25 parties en masse ou moins.

4. Pneumatique comprenant une bande de roulement, la bande de roulement comprenant au moins une première couche dont la surface externe constitue une surface de bande de roulement et une seconde couche située sur un côté le plus interne dans une direction radiale de pneumatique,
   la première couche étant composée de la composition de caoutchouc selon l'une quelconque des revendications 1 à 3.

5. Pneumatique comprenant une bande de roulement, la bande de roulement comprenant une première couche dont la surface externe constitue une surface de bande de roulement, une seconde couche située sur un côté le plus interne dans une direction radiale de pneumatique, et en outre au moins une couche intermédiaire entre la première couche et la seconde couche, la première couche étant composée de la composition de caoutchouc selon l'une quelconque des revendications 1 à 3.

6. Pneumatique comprenant une bande de roulement, la bande de roulement comprenant une première couche dont la surface externe constitue une surface de bande de roulement, une seconde couche située sur un côté le plus interne dans une direction radiale de pneumatique, et en outre au moins une couche intermédiaire entre la première couche et la seconde couche, au moins une de la première couche, de la seconde couche, et de la couche intermédiaire étant composée de la composition de caoutchouc selon l'une quelconque des revendications 1 à 3.

7. Pneumatique selon l'une quelconque des revendications 4 à 6, dans lequel, dans le cas où la première couche est composée de la composition de caoutchouc selon l'une quelconque des revendications 1 à 3, lorsqu'un rapport de bord de sillon de la surface de bande de roulement est définie comme C, une teneur (parties en masse) $A_1$ du noir de charbon particulaire sur la base de 100 parties en masse du composant de caoutchouc dans la première couche et C satisfont l'inégalité (2) décrite ci-dessous,

   $$A_1 \times C < 6000 \qquad (2).$$

8. Pneumatique selon l'une quelconque des revendications 4 à 7, dans lequel, dans une couche de caoutchouc de la bande de roulement qui est composée de la composition de caoutchouc selon l'une quelconque des revendications 1 à 3, lorsqu'une épaisseur (mm) de la couche de caoutchouc est définie comme D, une teneur (parties en masse) A du noir de charbon particulaire sur la base de 100 parties en masse du composant de caoutchouc dans la couche de caoutchouc et D satisfont l'inégalité (3) décrite ci-dessous,

$$A \times D < 2\,000 \qquad (3).$$

**9.** Pneumatique selon la revendication 5, dans lequel une couche intermédiaire adjacente à la première couche parmi l'au moins une couche intermédiaire est composée de la composition de caoutchouc selon l'une quelconque des revendications 1 à 3,

lorsqu'une teneur (parties en masse) du noir de charbon particulaire sur la base de 100 parties en masse du composant de caoutchouc de la première couche est définie comme $A_1$ et une teneur (parties en masse) du noir de charbon particulaire sur la base de 100 parties en masse du composant de caoutchouc de la couche intermédiaire adjacente à la première couche est définie comme $A_m$, $A_1$ et $A_m$ satisfaisant l'inégalité (4) décrite ci-dessous,

$$A_m / A_1 < 1,00 \qquad (4)$$

(pourvu que $A_m$ soit 20 ou plus).

**10.** Pneumatique selon la revendication 5 ou 9, dans lequel une couche intermédiaire adjacente à la première couche parmi l'au moins une couche intermédiaire est composée de la composition de caoutchouc selon l'une quelconque des revendications 1 à 3,

lorsqu'une teneur (parties en masse) de la silice sur la base de 100 parties en masse du composant de caoutchouc de la première couche est définie comme $B_1$ et une teneur (parties en masse) de la silice sur la base de 100 parties en masse du composant de caoutchouc de la couche intermédiaire adjacente à la première couche est définie comme $B_m$, $B_1$ et $B_m$ satisfaisant l'inégalité (5) décrite ci-dessous,

$$B_m / B_1 < 1,00 \qquad (5)$$

(pourvu que $B_m$ soit 8 ou plus).

**11.** Pneumatique selon l'une quelconque des revendications 4 à 10, dans lequel le pneumatique est un pneumatique pour poids-lourds.

FIG. 1

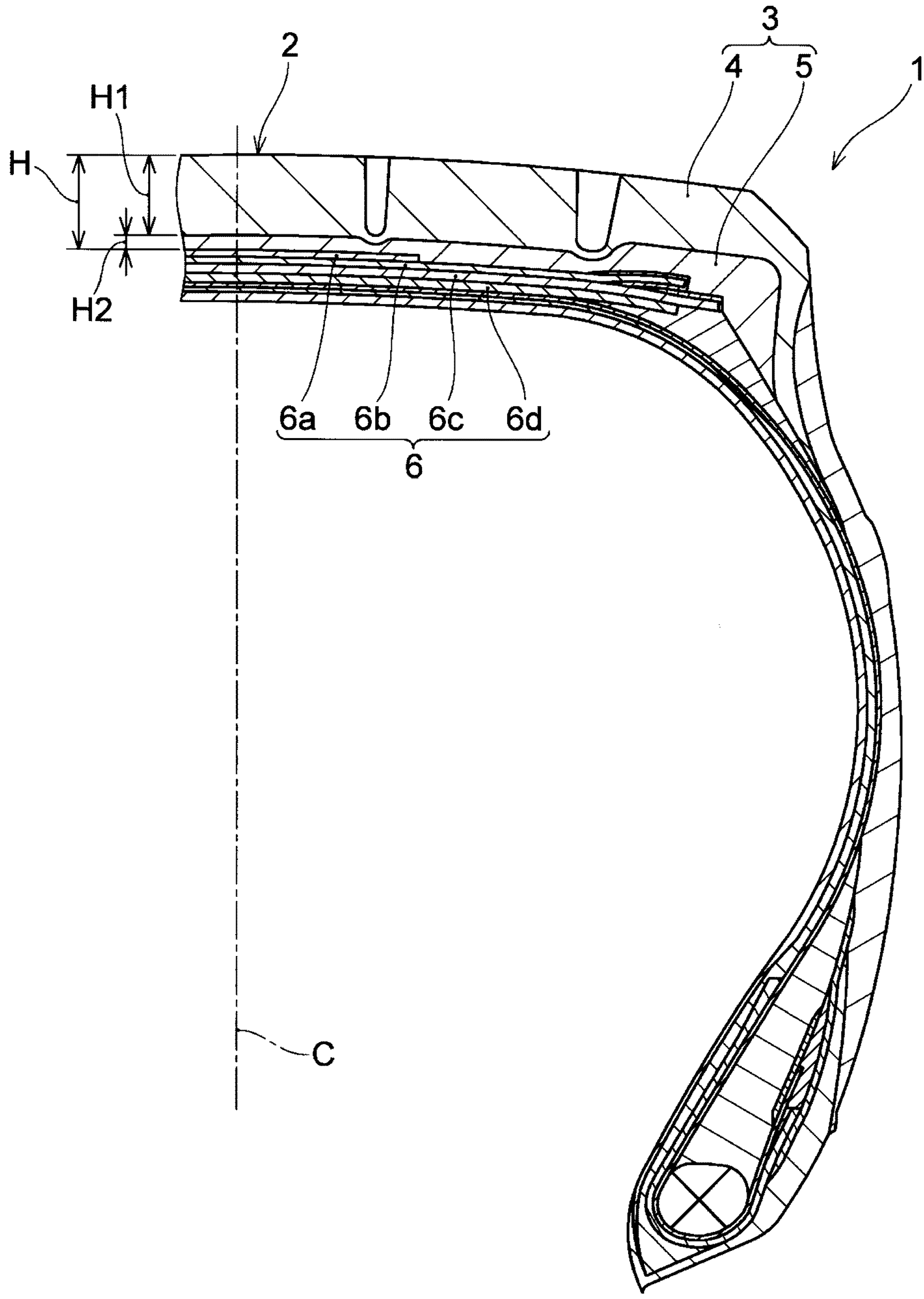

FIG. 2

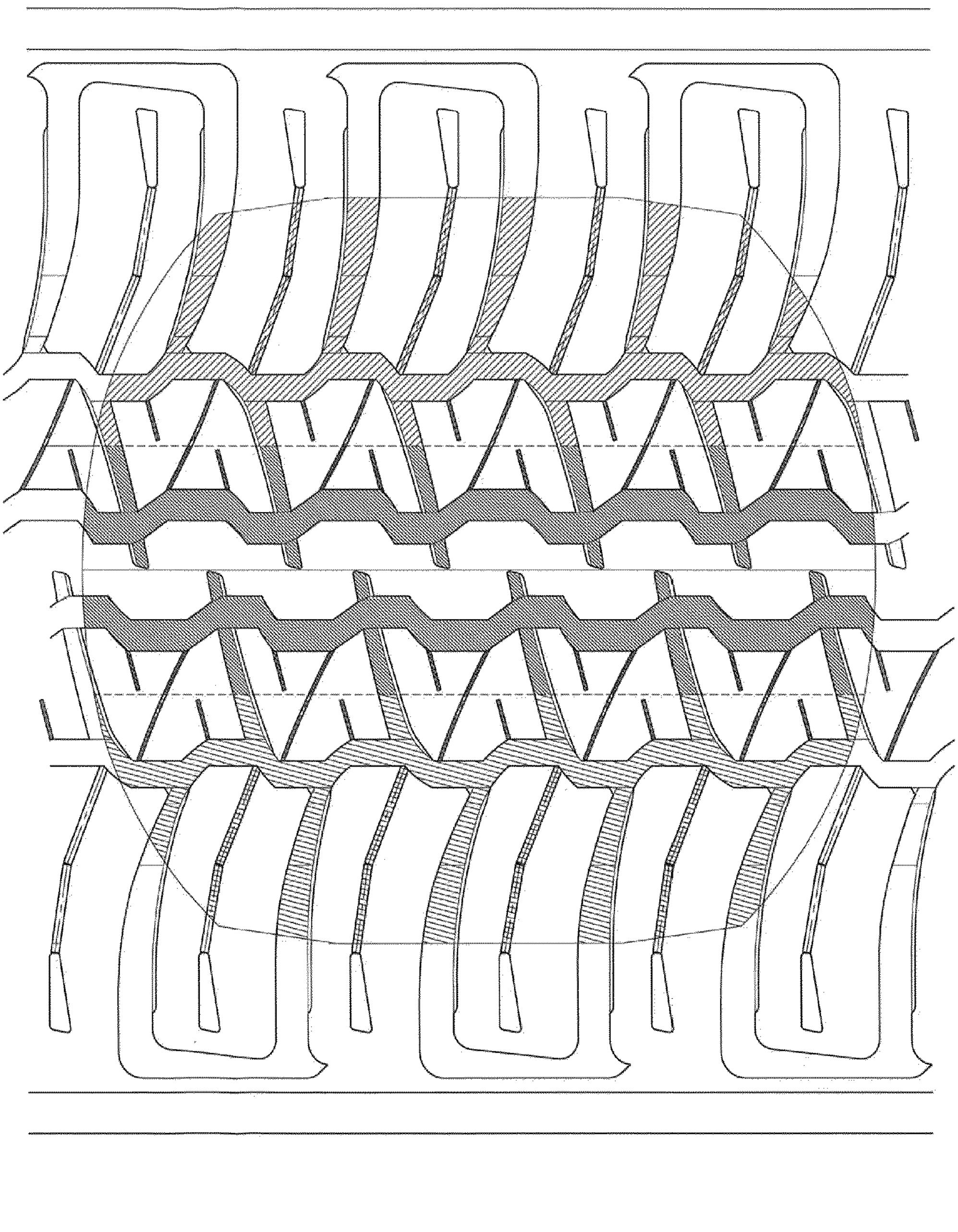

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020117020 A
- US 20201131346 A1
- EP 2578626 A1
- EP 572459 A1
- EP 2818507 A1